# EUROPÄISCHE PATENTSCHRIFT

(11) **EP 1 326 693 B1**
(45) Veröffentlichungstag und Bekanntmachung des Hinweises auf die Patenterteilung: **23.08.2006**
(21) Anmeldenummer: 00967888.9
(22) Anmeldetag: 18.10.2000
(51) Int. Cl.: B01D 29/13, B01D 29/50, B01D 27/06, B01D 27/14

(54) **FILTERVORRICHTUNG**
FILTER DEVICE
DISPOSITIF DE FILTRATION

(43) Veröffentlichungstag der Anmeldung: 16.07.2003
(73) Patentinhaber: ARGO-HYTOS GmbH, 76703 Kraichtal-Menzingen (DE)
(72) Erfinder: MÖSSINGER, Klaus, 74182 Obersulm (DE); DESCHNER, Klaus, 76684 Östringen (DE); BREUSCH, Norbert, 74889 Sinsheim (DE)
(74) Vertreter: Karrais, Martin
(86) Internationale Anmeldenummer: PCT/EP2000/010258
(87) Internationale Veröffentlichungsnummer: WO 2002/032543

(56) Entgegenhaltungen:
- EP-A- 1 031 367
- DE-A- 3 538 589
- DE-A- 19 538 883
- DE-A- 19 826 032
- DE-U- 29 723 508
- US-A- 4 090 962
- US-A- 5 378 363

## Beschreibung

Die Erfindung betrifft eine Filtervorrichtung zum Filtrieren einer Flüssigkeit, insbesondere eines Hydrauliköles, mit den Merkmalen des Oberbegriffes von Patentanspruch 1.

Derartige Filtervorrichtungen kommen beispielsweise zur Filtrierung von Mineralölen in Hydrauliksystemen zum Einsatz. Hierbei müssen die Hydrauliksysteme sehr hohen Anforderungen an die Sauberkeit des Hydrauliköles genügen, um über lange Betriebszeiten störungsfrei und mit geringem Verschleiß ihre Funktion erfüllen zu können. Da sich das Filterelement im Laufe der Betriebsdauer allmählich mit Schmutzteilchen zusetzt, ist es üblicherweise austauschbar im Filtergehäuse gehalten. Mittels des an der Endscheibe gehaltenen Dichtungselementes ist sichergestellt, daß das dem Rohbereich zugeführte ungefilterte Hydrauliköl innerhalb des Filtergehäuses das Filterelement nicht umgehen kann, sondern der Rohbereich zuverlässig abgedichtet ist. Hierzu kommen üblicherweise O-Ringdichtungen zum Einsatz, die an der Endscheibe gehalten sind. Hierzu umfaßt die Endscheibe üblicherweise eine O-Ringnut zur Aufnahme des O-Ringes.

In der DE 197 18 603 A1 wird vorgeschlagen, an die Endscheibe des Filterelements eine Dichtungslippe anzuformen, die mittels eines Spannringes gegen eine korrespondierende Dichtfläche gedrückt wird. Der Spannring übt auf die Dichtlippe eine Druckbelastung auf, so daß die für den Betrieb der Filtervorrichtung erforderlichen Dichtwirkung gewährleistet ist. Ergänzend zum Einsatz des Spannringes ist hierbei vorgesehen, daß die Dichtlippe zumindest zwei schräg zueinander gerichtete Abschnitte aufweist, die in ihrem Übergangsbereich eine Dichtkante zur Anlage an eine Dichtfläche ausbilden. Das Dichtungselement weist somit eine konstruktiv aufwendige Ausgestaltung auf, und beim Auswechseln des Filterelements muß sorgfältig darauf geachtet werden, daß der Spannring auf die Dichtlippe die zur Abdichtung erforderliche Druckkraft ausübt.

Aus der DE 195 38 883 A1 sowie der DE 35 38 589 A1 sind Filtervorrichtungen bekannt, die ein im wesentlichen zylinderförmiges Filtergehäuse aufweisen, das ein Filterelement aufnimmt und mittels eines Deckels verschließbar ist. Dem Filterelement ist ein Rohbereich mit einem Einlaß zur Zuführung zu filtrierender Flüssigkeit und ein Reinbereich mit einem Auslaß zur Abgabe gefilterter Flüssigkeit zugeordnet. Das Filterelement umfaßt eine dem Deckel abgewandte Endscheibe, an der ein radial wirkendes Dichtungselement gehalten ist zum Abdichten des Rohbereichs des Filterelementes. Das Dichtungselement weist eine radial abstehende Dichtlippe auf, die an der Innenseite des Filtergehäuses anliegt und In Richtung des Rohbereichs des Filterelementes geneigt ist.

Aufgabe der vorliegenden Erfindung ist es, eine Filtervorrichtung der gattungsgemäßen Art derart weiterzubilden, daß sie kostengünstiger herstellbar und das Filterelement einfach montierbar ist.

Diese Aufgabe wird bei einer Filtervorrichtung der eingangs genannten Art erfindungsgemäß dadurch gelöst, daß das Dichtungselement und die Endscheibe aus Kunststoff gefertigt und einstückig miteinander verbunden sind und daß sich das Filtergehäuse in Richtung auf den Deckel konisch erweitert.

Bei der erfindungsgemäßen Vorrichtung steht das Dichtungselement über die Endscheibe radial nach außen ab, und die Dichtlippe liegt an der Innenseite des Filtergehäuses an. Das Filterelement wird dadurch beim Einsetzen in das Filtergehäuse aufgrund der Anlage der Dichtlippe an der Innenseite des Filtergehäuses zentriert, so daß das Einsetzen des Filterelementes vereinfacht wird. Außerdem ist die Dichtlippe in Richtung des Rohbereichs des Filterelements geneigt. Durch eine derartige Neigung ist eine zuverlässige Dichtwirkung auch dann sichergestellt, wenn kein zusätzliches Spannelement zur Ausübung einer Druckbelastung auf die Dichtlippe zum Einsatz kommt. Die zur Erzielung einer zuverlässigen Dichtwirkung erforderliche Druckbelastung wird vielmehr während des Betriebes aufgrund des sich am Filterelement einstellenden Druckabfalls sichergestellt. Die Druckdifferenz zwischen dem Rohbereich und dem Reinbereich des Filterelements hat auf die schräg in Richtung des Rohbereichs ausgerichtete Dichtlippe eine radial nach außen in Richtung auf die Wandung des Filtergehäuses gerichtete Druckbelastung zur Folge, so daß diese an der Innenseite des Filtergehäuses dicht anliegt und den Rohbereich des Filterelements in axialer Richtung zuverlässig abdichtet.

Erfindungsgemäß sind das Dichtungselement und die Endscheibe aus Kunststoff gefertigt und einstückig miteinander verbunden. Die Herstellungskosten lassen sich dadurch beträchtlich verringern.

Außerdem ist gemäß der Erfindung vorgesehen, daß sich das Filtergehäuse in Richtung auf den Deckel konisch erweitert. Dies hat den Vorteil, daß das Einsetzen des Filterelements mit radial abstehender Dichtlippe vereinfacht wird und daß beim Herausnehmen des Filterelements der im eingebauten Zustand der Endscheibe benachbart angeordnete Bereich des Filtergehäuses einer besonders starken Abstreifwirkung unterliegt. Gerade in diesem Bereich lagern sich während des Betriebs der Filtervorrichtung verstärkt Schmutzteilchen ab, Von besonderem Vorteil ist es, wenn das freie Ende der Dichtlippe beim Herausnehmen des Filterelements aus dem Filtergehäuse dessen Innenseite zumindest entlang eines sich in axialer Richtung erstreckenden Teilbereichs abstreift. Dadurch kann auf konstruktiv einfache Weise sichergestellt werden, daß Schmutzteilchen, die sich während des Betriebes der Filtervorrichtung an der Innenseite des Filtergehäuses ablagern, abgestreift werden. Mit dem Auswechseln des Filterelementes ist somit gleichzeitig eine Reinigung der Innenseite des Filtergehäuses verbunden, ohne daß hierzu zusätzliche Reinigungsmaßnahmen erforderlich sind. Das Dichtungselement weist somit eine Doppelfunktion auf, indem es zum einen den Rohbereich des Filterelements zuverlässig abdichtet, und indem es zum anderen ein Abstreifelement bildet zur Reinigung der Innenseite des Filtergehäuses beim Auswechseln des Filterelements. Hierbei ist es günstig, wenn das freie Ende der Dichtlippe beim Auswechseln des Filterelements die Innenseite des Filtergehäuses in axialer Richtung vollständig abstreift. Eine beachtliche Reinigungswirkung wird jedoch bereits erzielt, wenn das freie Ende der Dichtlippe lediglich den im eingebauten Zustand des Filterelements den der Endscheibe benachbarten Bereich der Innenseite des Filtergehäuses abstreift, da in diesem Bereich während des Betriebes der Filtervorrichtung ein besonders hoher Schmutzbefall auftritt.

Bei einer besonders bevorzugten Ausführungsform ist vorgesehen, daß das Dichtungselement einen Sammelraum ausbildet zur Aufnahme von sich beim Herausnehmen des Filterelements ablagernder Schmutzteilchen. Bei einer derartigen Ausgestaltung wird die Gefahr beträchtlich vermindert, daß beim Herausnehmen des Filterelements Schmutzteilchen vom Rohbereich in den Reinbereich gelangen können. Die Schmutzteilchen lagern sich vielmehr im Sammelraum des Dichtungselements ab und können zusammen mit dem zugesetzten Filterelement entsorgt werden.

Vorzugsweise ist die Dichtlippe rinnenförmig ausgestaltet, wobei der freie Endbereich der Dichtlippe dem Deckel zugewandt ist. Die Dichtlippe bildet somit einen das Filterelement in Umfangsrichtung umgebenden ringförmigen Sammelraum zur Aufnahme sich ablagernder Schmutzteilchen und ist in Richtung des Rohbereichs des Filterelements geneigt.

Besonders günstig ist es, wenn das Dichtungselement im wesentlichen V-förmig ausgebildet ist mit einem ersten Schenkel, der sich vom Außenrand der Endscheibe bis zur Innenseite des umgebenden Filtergehäuses erstreckt, und mit einem zweiten Schenkel, der einen im wesentlichen koaxial zur Längsachse des Filtergehäuses ausgerichteten Haltering bildet, welcher ein hohlzylinderförmig angeordnetes Filtermaterial des Filterelements in Umfangsrichtung umgibt. Durch den Haltering wird das vorzugsweise sternförmig gefaltete Filtermaterial in radialer Richtung gestützt, während der schräg zum Haltering ausgerichtete erste Schenkel des Dichtungselements eine an der Innenseite des Filtergehäuses anliegende Dichtlippe ausbildet.

Bevorzugt sind das Filtergehäuse und der Deckel aus Kunststoff gefertigt. Hierbei ist es günstig, wenn das Filtergehäuse an seiner Außenseite radial abstehende Verstärkungsrippen aufweist, da sich dadurch auf kostengünstig herstellbare Weise ein auch höheren Drücken standhaltende Filtervorrichtung ausbilden läßt.

Bei einer besonders bevorzugten Ausführungsform der Erfindung ist vorgesehen, daß auf der dem Deckel abgewandten Seite der Endscheibe ein Zusatzfilterelement angeordnet ist, dem ein separater Rohbereich mit einem Einlaß für zu filtrierende Flüssigkeit zugeordnet ist, wobei das an der Endscheibe gehaltene Dichtungselement den dem Filterelement zugeordneten Rohbereich gegenüber dem dem Zusatzfilterelement zugeordneten Rohbereich abdichtet. Eine derartige Ausgestaltung ermöglicht es, die Filtervorrichtung gleichzeitig sowohl als Saugfilter als auch als Rücklauffilter einzusetzen. Hierzu kann vorgesehen sein, daß das Filterelement eine höhere Filterfeinheit aufweist als das Zusatzfilterelement und daß die Filtervorrichtung einen gemeinsamen Auslaß für das Filterelement und das Zusatzfilterelement umfaßt. Eingangsseitig kann dem Zusatzfilterelement beispielsweise aus einem Ölvorrat zu filtrierendes Hydrauliköl zugeführt werden, das vom Zusatzfilterelement gefiltert und über den Auslaß beispielsweise einer Pumpe zugeführt wird. Gleichzeitig wird das Filterelement in eine Rücklaufleitung des Hydrauliksystems eingesetzt, wobei der dem Filterelement zugeordnete Einlaß mit einem Arbeitselement des Hydrauliksystems verbunden ist und das gefilterte Hydrauliköl über den gemeinsamen Auslaß der Filtervorrichtung ebenfalls der Pumpe zugeführt werden kann. Das an der Endscheibe des Filterelements angeordnete Dichtungselement stellt hierbei zuverlässig sicher, daß der Rohbereich des Filterelements gegenüber dem Rohbereich des Zusatzfilterelements abgedichtet ist.

Besonders günstig ist es, wenn das Zusatzfilterelement auf seiner dem Deckel abgewandten Stirnseite eine Abschlußscheibe trägt, an der ein weiteres Dichtungselement gehalten ist mit einer an der Innenseite de Filtergehäuses anliegenden, in Richtung des dem Zusatzfilterelement zugeordneten Rohbereichs geneigten Dichtlippe. Eine derartige Ausgestaltung zeichnet sich durch den Einsatz von insgesamt zwei Dichtungselementen aus, die von der Endscheibe des Filterelements bzw. der Abschlußscheibe des Zusatzfilterelements radial nach außen abstehen und jeweils an der Innenseite des Filtergehäuses anliegen. Während das an der Endscheibe gehaltene Dichtungselement die Rohbereiche des Filterelements und des Zusatzfilterelements voneinander dicht trennt, wird mittels des an der Abschlußscheibe des Zusatzfilterelementes angeordneten Dichtungselements sichergestellt, daß der Rohbereich des Zusatzfilterelements gegenüber dessen Reinbereich abgedichtet ist.

Vorzugsweise sind zur Erzielung einer besonders einfachen Montage das Filterelement und das Zusatzfilterelement in axialer Richtung aufeinander aufsteckbar. Hierbei ist es von Vorteil, wenn das Filterelement und das Zusatzfilterelement miteinander verrastbar sind. Es kann vorgesehen sein, daß das Zusatzfilterelement und das Filterelement unlösbar miteinander verbindbar sind.

Das Auswechseln des Filterelements läßt sich dadurch vereinfachen, daß das Filterelement über eine Rastverbindung mit dem Deckel lösbar verbindbar ist. Dies gibt die Möglichkeit, ein zugesetztes Filterelement zusammen mit dem Deckel dem Filtergehäuse zu entnehmen und anschließend das zugesetzte Filterelement vom Deckel zu lösen. Es kann dann ein neues Filterelement über die Rastverbindung mit dem Deckel verbunden und in das Filtergehäuse eingesetzt werden.

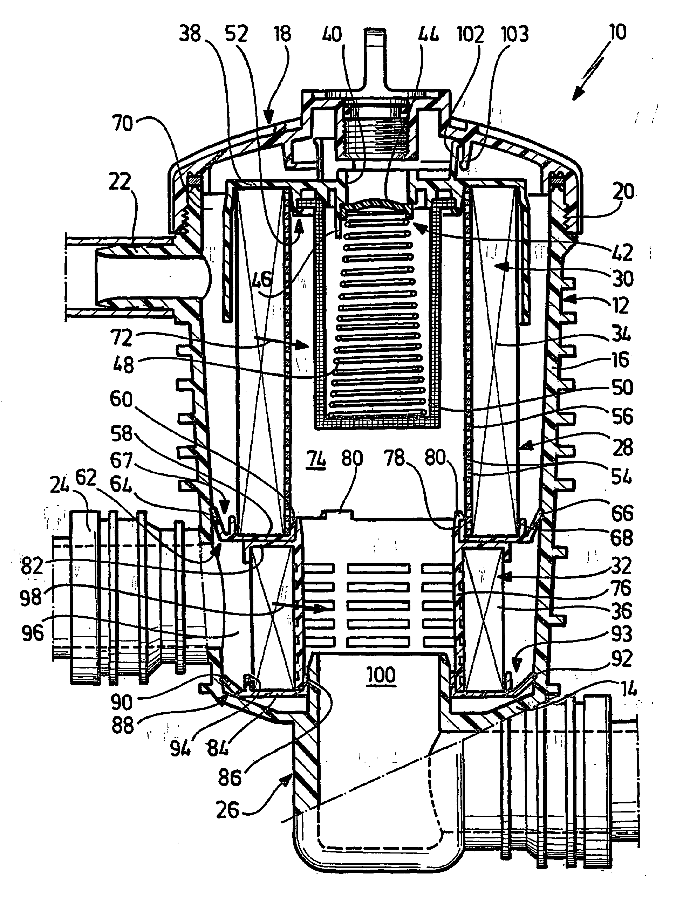

Die nachfolgende Beschreibung einer bevorzugten Ausführungsform der Erfindung dient im Zusammenhang mit der Zeichnung der näheren Erläuterung.

In der einzigen Figur ist in einem schematischen Längsschnitt eine Filtervorrichtung dargestellt.

Die mit dem Bezugszeichen 10 belegte Filtervorrichtung umfaßt ein im wesentlichen zylinderförmiges Filtergehäuse 12 mit einem Boden 14 und einem Gehäusemantel 16. Auf seine dem Boden 14 abgewandte Oberkante ist auf das Filtergehäuse 12 unter Zwischenschaltung eines Dichtringes ein Deckel 18 aufsetzbar, der über eine Schraubverbindung 20 mit dem Filtergehäuse 12 lösbar verbindbar ist. An den Gehäusemantel 16 ist dem Deckel 18 benachbart ein radial abstehender erster Einlaßstutzen 22 und dem Boden 14 benachbart ein radial abstehender zweiter Einlaßstutzen 24 angeformt, während an den Boden 14 ein einziger AuslaBstutzen 26 angeformt ist.

Das Filtergehäuse 12 nimmt ein Kombinationsfilterelement 28 auf, das ein dem Deckel 18 benachbartes erstes Filterelement 30 und ein dem Boden 14 benachbartes zweites Filterelement 32 aufweist. Die beiden Filterelemente 30 und 32 sind in axialer Richtung aufeinander aufgesteckt und umfassen jeweils ein in üblicher Weise sternförmig gefaltetes Filtermaterial 34 bzw. 36. Das Filtermaterial 34 des ersten Filterelements 30 weist eine höhere Filterfeinheit auf als das Filtermaterial 36 des zweiten Filterelementes 32. Als Filtermaterial 34 für das erste Filterelement 30 kann beispielsweise ein Faservlies zum Einsatz kommen mit einer derartigen Feinheit, daß selbst Schmutzpartikel der Größe von ca. 5 µm noch mit einem Wirkungsgrad von mindestens 50% ausgefiltert werden können.

Im Gegensatz hierzu ist das Filtermaterial 36 des zweiten Filterelements 32 gröber ausgestaltet, es kann beispielsweise als Siebelement ausgebildet sein mit einer Filterfeinheit von mindestens etwa 60 µm.

Auf seiner dem Deckel 18 zugewandten Stirnseite trägt das Filtermaterial 34 des ersten Filterelements 30 eine Stirnkappe 38 mit einer zentralen Durchgangsöffnung 40, an der ein Bypassventil 42 gehalten ist. Das Bypassventil 42 umfaßt einen Ventilteller 44, der in einer einstückig mit der Stirnkappe 38 verbundenen Ventilführung 46 in axialer Richtung verschiebbar gehalten und mittels einer Druckfeder 48 in Richtung auf seine Schließstellung federbelastet ist.

Die Druckfeder 48 stützt sich mit ihrer dem Ventilteller 44 abgewandten Endseite an einem Siebgehäuse 50 ab, das über eine Rastverbindung 52 an der Stirnkappe 38 gehalten ist.

Das in Form eines Hohlzylinders angeordnete Filtermaterial 34 des ersten Filterelementes 30 stützt sich in radialer Richtung an einem eine Vielzahl von Durchgangsbohrungen 54 aufweisenden Stützrohr 56 ab.

Auf seiner dem Deckel 18 abgewandten Stirnseite trägt das erste Filterelement 30 eine kreisringförmige Endscheibe 58, die an ihrem inneren Randbereich einen koaxial zur Längsachse des Filtergehäuses 12 ausgerichteten Stützring 60 trägt und ebenso wie das Filtergehäuse 12, der Deckel 18 und die Stirnkappe 38 aus Kunststoff gefertigt ist.

An ihrem Außenrand trägt die Endscheibe 58 ein einstükkig mit der Endscheibe 58 verbundenes Dichtungselement 62, das im wesentlichen V-förmig ausgestaltet ist mit einem ersten Schenkel, der eine Dichtlippe 64 ausbildet und schräg zur Längsachse des Filtergehäuses 12 ausgerichtet ist, so daß ein freier Endbereich 66 der Dichtlippe 64 dem Deckel 18 zugewandt an der Innenseite des Gehäusemantels 16 anliegt, und mit einem zweiten Schenkel, der einen koaxial zum Stützring 60 ausgerichteten Haltering 68 ausbildet und das Filtermaterial 34 in seinem der Endscheibe 58 zugewandten Endbereich in Umfangsrichtung umgibt.

Über den ersten Einlaßstutzen 22 kann zu filtrierendes Hydrauliköl einem das erste Filterelement 30 in Umfangsrichtung umgebenden Ringraum zugeführt werden, der einen dem ersten Filterelement 30 zugeordneten Rohbereich 70 ausbildet. Von diesem durchströmt das Hydrauliköl das erste Filterelement 30 in radialer Richtung von außen nach innen, wie dies durch den Pfeil 72 symbolisiert ist, und gelangt anschließend in den vom Filtermaterial 34 umgebenen Reinbereich 74 des Filterelements 30.

Da sich das Filtermaterial 34 des ersten Filterelements im Laufe des Filterbetriebes zusetzt, ergibt sich ein zunehmender Druckabfall am ersten Filterelement 30. Dieser hat zur Folge, daß bei Erreichen eines vorbestimmten Differenzdruckwertes das Bypassventil 42 öffnet und dadurch eine unmittelbare Strömungsverbindung vom Rohbereich 70 zum Reinbereich 74 freigegeben wird.

Der Rohbereich 70 wird in axialer Richtung vom Dichtungselement 62 begrenzt. Hierbei übt die im Rohbereich 70 vorliegende ungefilterte Hydraulikflüssigkeit auf die in Richtung des Rohbereichs 70 geneigte Dichtungslippe 64 eine derartige Druckbelastung auf, daß die Dichtungslippe 64 radial nach außen gegen die Innenseite des Gehäusemantels 16 gedrückt wird. Dies hat eine zuverlässige Abdichtung des Rohbereichs 70 zur Folge.

Das zweite Filterelement 32 ist koaxial zum ersten Filterelement 30 ausgerichtet und umfaßt ein Stützrohr 76 zur Abstützung des Filtermaterials 36. Das Stützrohr 76 ist ebenfalls aus Kunststoff gefertigt und umfaßt dem ersten Filterelement 30 zugewandt einen kragenförmigen Ansatz-78, der in den Stützring 60 einführbar und mittels angeformter Rastzungen 80 mit dem Stützring 60 verrastbar ist.

An das Stützrohr 76 ist eine an der Endscheibe 58 anliegende Deckscheibe 82 angeformt, die die dem ersten Filterelement 30 zugewandte obere Stirnseite des Filtermaterials 36 abdeckt. Auf der dem ersten Filterelement 30 abgewandten Stirnseite des hohlzylinderförmig angeordneten Filtermaterials 36 ist eine kreisringförmige Abschlußscheibe 84 angeordnet, die an ihrem Innenrand einen koaxial zur Längsachse des Filtergehäuses 12 ausgerichteten Stützring 86 trägt und ebenfalls aus Kunststoff gefertigt ist. An den Außenrand der Abschlußscheibe 84 ist ein Dichtungselement 88 angeformt, das entsprechend dem Dichtungselement 62 im wesentlichen V-förmig ausgestaltet ist mit einem schräg zur Längsachse des Filtergehäuses 12 ausgerichteten ersten Schenkel, der eine Dichtlippe 90 ausbildet, deren freier Endbereich 92 dem Deckel 18 zugewandt an der Innenseite des Gehäusemantels 16 anliegt, und mit einem zweiten Schenkel, der einen koaxial zur Längsachse des Filtergehäuses 12 ausgerichteten und das Filtermaterial 36 in Umfangsrichtung umgebenden Haltering 94 bildet.

Entsprechend dem ersten Filterelement ist auch das zweite Filterelement 32 im Abstand zum Gehäusemantel 16 angeordnet, so daß sich zwischen dem Gehäusemantel 16 und dem Filtermaterial 36 ein ringförmiger Rohbereich 96 ausbildet, dem über den zweiten Einlaßstutzen 24 beispielsweise zu filtrierendes Hydrauliköl zugeführt werden kann. Letzteres durchströmt das Filtermaterial 36 in radialer Richtung von außen nach innen, wie dies durch den Pfeil 98 verdeutlicht ist, und gelangt dadurch in den vom Filtermaterial 36 umgebenen Reinbereich 100, der über den Ansatz 78 mit dem Reinbereich 74 des ersten Filterelements 30 in Strömungsverbindung steht und von dem aus das gefilterte Hydrauliköl über den Auslaßstutzen 26 ausgegeben werden kann.

An den Auslaßstutzen 26 kann beispielsweise eine Pumpe angeschlossen werden, während der erste Einlaßstutzen 22 mit einem Arbeitselement eines Hydrauliksystems in Verbindung steht und der zweite Einlaßstutzen 24 an ein Vorratsgefäß für Hydrauliköl angeschlossen ist. Dies gibt die Möglichkeit, die Filtervorrichtung 10 als kombiniertes Rücklauf-Saugfilter einzusetzen. Mittels des Dichtungselementes 62 ist hierbei sichergestellt, daß der Rohbereich 70 des ersten Filterelementes gegenüber dem Rohbereich 96 des zweiten Filterelementes 32 abgedichtet ist, ohne daß hierzu zusätzliche Spannelemente zum Einsatz kommen müssen. Entsprechendes gilt für den Einsatz des Dichtungselementes 88, das den Rohbereich 96 des zweiten Filterelementes gegenüber dessen Reinbereich 100 abdichtet.

Zum Austausch kann das Kombinationsfilterelement 32 durch Lösen der Schraubverbindung 20 und Abnehmen des Deckels 18 dem Filtergehäuse 12 entnommen werden. Das Kombinationsfilterelement 28 ist hierbei über einstükkig mit der Stirnkappe 38 bzw. mit dem Deckel 18 verbundene, sich gegenseitig hintergreifende Rastzungen 102, 103 lösbar mit dem Deckel 18 verbunden.

Beim Herausnehmen des Kombinationsfilterelementes 28 aus dem Filtergehäuse 12 wird die Innenseite des Gehäusemantels 16 von den Dichtlippen 64 und 90 abgestreift und sich von der Innenseite des Gehäusemantels 16 lösende Schmutzteilchen werden von dem Zwischenraum 67 zwischen der Dichtlippe 64 und dem Stützring 60 sowie dem Zwischenraum 93 zwischen der Dichtlippe 90 und dem Stützring 86 aufgenommen. Die Zwischenräume 67 und 93 bilden somit jeweils einen Sammelraum für Schmutzteilchen, so daß diese zusammen mit dem Kombinationsfilterelement 28 dem Filtergehäuse 12 entnommen und entsorgt werden können.

## Patentansprüche

1. Filtervorrichtung zum Filtrieren einer Flüssigkeit, insbesondere eines Hydrauliköles, mit einem im wesentlichen zylinderförmigen Filtergehäuse (12), das ein Filterelement (30) aufnimmt und mittels eines Deckels (18) verschließbar ist, wobei dem Filterelement (30) ein Rohbereich (70) mit einem Einlaß (22) zur Zuführung zu filtrierender Flüssigkeit und ein Reinbereich (74) mit einem Auslaß (26) zur Abgabe gefilterter Flüssigkeit zugeordnet ist, und wobei das Filterelement (30) eine dem Deckel (18) abgewandte Endscheibe (58) umfaßt, an der ein radial wirkendes Dichtungselement (62) gehalten ist zum Abdichten des Rohbereichs (70) des Filterelementes (30), wobei das Dichtungselement (62) eine radial abstehende Dichtlippe (64) umfaßt, die an der Innenseite des Filtergehäuses (12) anliegt und in Richtung des Rohbereichs (70) des Filterelementes (30) geneigt ist, **dadurch gekennzeichnet, daß** das Dichtungselement (62) und die Endscheibe (58) aus Kunststoff gefertigt und einstückig miteinander verbunden sind und daß sich das Filtergehäuse (12) in Richtung auf den Deckel (18) konisch erweitert.

2. Filtervorrichtung nach Anspruch 1, **dadurch gekennzeichnet, daß** das freie Ende (66) der Dichtlippe (64) beim Herausnehmen des Filterelementes (30) aus dem Filtergehäuse (12) dessen Innenseite zumindest entlang eines sich in axialer Richtung erstreckenden Teilbereichs abstreift.

3. Filtervorrichtung nach Anspruch 1 oder 2, **dadurch gekennzeichnet, daß** das Dichtungselement (62) einen Sammelraum (67) ausbildet zur Aufnahme von sich beim Herausnehmen des Filterelementes (39) aus dem Filtergehäuse (12) ablagernder Schmutzteilchen.

4. Filtervorrichtung nach einem der voranstehenden Ansprüche, **dadurch gekennzeichnet, daß** das Dichtungselement (62) rinnenförmig ausgestaltet ist, wobei das freie Ende (66) der Dichtlippe (64) dem Deckel (18) zugewandt ist.

5. Filtervorrichtung nach einem der voranstehenden Ansprüche, **dadurch gekennzeichnet, daß** das Filtergehäuse (12) und der Deckel (18) aus Kunststoff gefertigt sind.

6. Filtervorrichtung nach einem der voranstehenden Ansprüche, **dadurch gekennzeichnet, daß** auf der dem Deckel (18) abgewandten Seite der Endscheibe (58) ein Zusatzflterelement (32) angeordnet ist, dem ein separater Rohbereich (96) mit einem Einlaß (24) für zu filtrierende Flüssigkeit zugeordnet ist, wobei das an der Endscheibe (58) gehaltene Dichtungselement (62) den dem Filterelement (30) zugeordneten Rohbereich (70) gegenüber dem dem Zusatzfilterelement (32) zugeordneten Rohbereich (96) abdichtet.

7. Filtervorrichtung nach Anspruch 6, **dadurch gekennzeichnet, daß** das Zusatzfilterelement (32) auf seiner dem Deckel (18) abgewandten Stirnseite eine Abschlußscheibe (84) trägt, an der ein weiteres Dichtungselement (88) gehalten ist mit einer an der Innenseite des Filtergehäuses (12) anliegenden, in Richtung des dem Zusatzfilterelement (32) zugeordneten Rohbereichs (96) geneigten Dichtlippe (90).

8. Filtervorrichtung nach Anspruch 6 oder 7, **dadurch gekennzeichnet, daß** das Filterelement (30) und Zusatzfilterelement (32) in axialer Richtung aufeinander aufsteckbar sind.

9. Filtervorrichtung nach Anspruch 6, 7 oder 8, **dadurch gekennzeichnet, daß** das Filterelement (30) und das Zusatzfilterelement (32) miteinander verrastbar sind.

10. Filtervorrichtung nach einem der voranstehenden Ansprüche, **dadurch gekennzeichnet, daß** das Filterelement (30) über eine Rastverbindung (102, 103) mit dem Deckel (18) lösbar verbindbar ist.

## Claims

1. Filter device for filtering a liquid, in particular a hydraulic oil, having a substantially cylindrical filter housing (12), which accommodates a filter element (30) and can be closed off by means of a cover (18), the filter element (30) having an associated untreated region (70) with an inlet (22) for supplying liquid which is to be filtered and a clean region (74) with an outlet (26) for removing filtered liquid, and the filter element (30) comprising an end plate (58) which is remote from the cover (18) and on which there is mounted a radially acting sealing element (62) for sealing the untreated region (70) of the filter element (30), wherein the sealing element (62) comprises a radially protruding sealing lip (64) which bears against the inner side of the filter housing (12) and is inclined toward the untreated region (70) of the filter element (30), **characterized in that** the sealing element (62) and the end plate (58) are made from plastics and are connected integrally to one another, and **in that** the filter housing (12) widens conically in the direction of the cover (18).

2. Filter device according to claim 1, **characterized in that** the free end (66) of the sealing lip (64), when the filter element (30) is being removed from the filter housing (12), scrapes along the inner side of the filter housing at least along a partial region which extends in the axial direction.

3. Filter device according to claim 1 or 2, **characterized in that** the sealing element (62) forms a collection space (67) for receiving dirt particles which are deposited during removal of the filter element (30) from the filter housing (12).

4. Filter device according to any one of the preceding claims, **characterized in that** the sealing element (62) is configured in the form of a channel, with the free end (66) of the sealing lip (64) facing the cover (18).

5. Filter device according to any one of the preceding claims, **characterized in that** the filter housing (12) and the cover (18) are made from plastics.

6. Filter device according to any one of the preceding claims, **characterized in that** an additional filter element (32), which has associated with it a separate untreated region (96) with an inlet (24) for the liquid which is to be filtered, is disposed on that side of the end plate (58) which is remote from the cover (18), and the sealing element (62) mounted on the end plate (58) seals the untreated region (70) associated with the filter element (30) with respect to the untreated region (96) associated with the additional filter element (32).

7. Filter device according to claim 6, **characterized in that** the additional filter element (32), on its end side which is remote from the cover (18), carries a closure plate (84), on which a further sealing element (88) is mounted, having a sealing lip (90) which bears against the inner side of the filter housing (12) and is inclined in the direction of the untreated region (96) associated with the additional filter element (32).

8. Filter device according to claim 6 or 7, **characterized in that** the filter element (30) and the additional filter element (32) can be fitted onto one another in the axial direction.

9. Filter device according to claim 6, 7 or 8, **characterized in that** the filter element (30) and the additional filter element (32) can be latched together.

10. Filter device according to any one of the preceding claims, **characterized in that** the filter element (30) can be releasably connected to the cover (18) by means of a latching connection (102, 103).

## Revendications

1. Dispositif formant filtre destiné à filtrer un liquide, notamment une huile hydraulique, lequel dispositif formant filtre comporte un boîtier de filtre (12) de forme sensiblement cylindrique, qui reçoit un élément de filtre (30) et qui peut être fermé par un couvercle (18), l'élément de filtre (30) étant associé à une zone brute (70) comportant une entrée (22) destinée à amener le liquide à filtrer et une zone pure (74) comportant une sortie (26) destinée à délivrer le liquide filtré, et l'élément de filtre (30) comportant un disque d'extrémité (58) qui est opposé au couvercle (18) et sur lequel est maintenu un-élément d'étanchéité (62) qui agit radialement pour isoler de façon étanche la zone brute (70) de l'élément de filtre (30), l'élément d'étanchéité (62) comportant une lèvre d'étanchéité (64) qui s'étend radialement et qui porte contre le côté intérieur du boîtier de filtre (12) et qui est inclinée en direction de la zone brute (70) de l'élément de filtre (30), **caractérisé en ce que** l'élément d'étanchéité (62) et le disque d'extrémité (58) sont fabriqués à partir d'une matière plastique et sont reliés d'une seule pièce l'un à l'autre, et **en ce que** le boîtier de filtre (12) s'élargit en cône en direction du couvercle (18).

2. Dispositif formant filtre selon la revendication 1, **caractérisé en ce que** l'extrémité libre (66) de la lèvre d'étanchéité (64) frotte contre le côté intérieur du boîtier de filtre (12), lors de la sortie de l'élément de filtre (30) hors du boîtier de filtre (12), au moins le long d'une région partielle s'étendant dans une direction axiale.

3. Dispositif formant filtre selon la revendication 1 ou 2, **caractérisé en ce que** l'élément d'étanchéité (62) forme un espace de collecte (67) destiné à recevoir des particules de souillure déposées lors de la sortie de l'élément de filtre (30) hors du boîtier de filtre (12).

4. Dispositif formant filtre selon l'une des revendications précédentes, **caractérisé en ce que** l'élément d'étanchéité (62) est conformé en gouttière, l'extrémité libre (66) de la lèvre d'étanchéité (64) étant dirigée vers le couvercle (18).

5. Dispositif formant filtre selon l'une des revendications précédentes, **caractérisé en ce que** le boîtier de filtre (12) et le couvercle (18) sont fabriqués à partir d'une matière plastique.

6. Dispositif formant filtre selon l'une des revendications précédentes, **caractérisé en ce que**, du côté du disque d'extrémité (58) qui est opposé au couvercle (18), est disposé un élément de filtre supplémentaire (32) auquel est associée une zone brute séparée (96) comportant une entrée (24) destinée au liquide à filtrer, l'élément d'étanchéité (62) maintenu contre le disque d'extrémité (58) isolant la zone brute (70), associée à l'élément de filtre (30), de façon étanche par rapport à la zone brute (96) associée à l'élément de filtre supplémentaire (32).

7. Dispositif formant filtre selon la revendication 6, **caractérisé en ce que** l'élément de filtre supplémentaire (32) supporte, sur son côté frontal opposé au couvercle (18), un disque de fermeture (84) contre lequel est maintenu un autre élément d'étanchéité (88) comportant une lèvre d'étanchéité (90) qui porte contre le côté intérieur du boîtier de filtre (12) et qui est inclinée en direction de la zone brute (96) associée à l'élément de filtre supplémentaire (32).

8. Dispositif formant filtre selon la revendication 6 ou 7, **caractérisé en ce que** l'élément de filtre (30) et l'élément de filtre supplémentaire (32) peuvent être emboîtés l'un sur l'autre dans une direction axiale.

9. Dispositif formant filtre selon la revendication 6, 7 ou 8, **caractérisé en ce que** l'élément de filtre (30) et l'élément de filtre supplémentaire (32) peuvent être encliquetés l'un avec l'autre.

10. Dispositif formant filtre selon l'une des revendications précédentes, **caractérisé en ce que** l'élément de filtre (30) peut être relié de façon amovible au couvercle (18) par une liaison par encliquetage (102, 103).
